(19) Europäisches Patentamt
European Patent Office
Office européen des brevets

(11) **EP 4 667 774 A1**

(12) **EUROPEAN PATENT APPLICATION**

(43) Date of publication:
**24.12.2025 Bulletin 2025/52**

(21) Application number: **25183408.1**

(22) Date of filing: **17.06.2025**

(51) International Patent Classification (IPC):
*F16F 15/02* (2006.01)     *G10K 11/16* (2006.01)

(52) Cooperative Patent Classification (CPC):
**F16F 15/02; G10K 11/16**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **20.06.2024 KR 20240080394**
**10.04.2025 KR 20250046925**

(71) Applicant: **Korea Advanced Institute of Science and Technology**
**Daejeon 34141 (KR)**

(72) Inventors:
• **JEON, Wonju**
**34141 Daejeon (KR)**
• **SON, Taehwan**
**34141 Daejeon (KR)**

(74) Representative: **Kraus & Lederer PartGmbB**
**Thomas-Wimmer-Ring 15**
**80539 München (DE)**

(54) **APPARATUS FOR VIBRATION DAMPING**

(57)     The present invention has proposed the technology of increasing space efficiency and vibration damping performance by designing a structure capable of sufficiently reducing low-frequency vibrations while occupying a relatively small space. In particular, a cut-on frequency of an acoustic black hole is reduced so that low-frequency vibrations may be absorbed by increasing a length of an effective wave propagation path using geometric characteristics of a vortex shape even when it occupies the same area.

FIG. 1

EP 4 667 774 A1

# EP 4 667 774 A1

**Description**

## CROSS-REFERENCE TO RELATED APPLICATIONS

This application claims priority under 35 U.S.C. §119 to Korean Patent Application No. 10-2024-0080394, filed on Jun. 20, 2024 and Korean Patent Application No. 10-2025-0046925, filed on Apr. 10, 2025, in the Korean Intellectual Property Office, the disclosure of which is incorporated herein by reference in its entirety.

## TECHNICAL FIELD

The following disclosure relates to an apparatus for vibration damping.

## BACKGROUND

Vibration impairs the durability of systems such as mechanical equipment, transportation/transportation means, home appliances, and buildings, or causes vibration-induced noise, and in ultra-precision processing processes such as semiconductor manufacturing, causes problems of reducing process precision. To solve these problems, a technology for vibration damping that reduces a size of vibration is being utilized and studied. A representative technology for vibration damping includes a tuned mass damper that is attached to a specific location of a vibrating structure and absorbs vibration energy, and a method of attaching a vibration damping material that is attached to a front of a structure and dissipates vibration energy into heat energy. Meanwhile, there is also an approach that damps vibration by absorbing elastic waves propagating within a structure. The approach includes an acoustic black hole, a wave-based concept that has been actively studied in academia recently.

A tuned mass damper, which is a first example of the background technology, absorbs vibration energy based on resonance, so it has a very narrow operating frequency band, and even when the tuned mass damper reduces the vibration of a targeted frequency, it has the problem that unwanted vibration is amplified at two frequencies near the targeted frequency. The method of attaching a vibration damping material generally requires a vibration damping material to be attached thickly to a wide surface, so there is a disadvantage that the weight of the structure increases and the vibration damping performance is low compared to the attached weight. The acoustic black hole may significantly dampen vibrations by causing almost no reflection of elastic waves above a specific frequency when the elastic waves are incident, but has a problem in that the length should be long or a space occupied needs to increase in order to absorb low-frequency elastic waves.

## SUMMARY

The present disclosure overcomes the limitations of the previously mentioned conventional technology by designing an apparatus for vibration damping as a new type of two-dimensional acoustic black hole (ABH) composed of vortex-shaped ABHs arranged in a rotational direction. As a result, an embodiment of the present disclosure is directed to reducing vibration and vibration-induced noise in systems such as vehicles, pumps, ships, home appliances, apartment complexes, and semiconductor processes by using a solution that has excellent performance while requiring a small installation space.

An apparatus of the present invention includes a vortex-shaped acoustic black hole, and can absorb and dissipate elastic waves even with a very small size compared to a wavelength to reduce vibration.

The apparatus of the present invention can design an acoustic black hole suitable for absorbing low-frequency elastic waves by maximizing an effective propagation length of elastic waves within a limited space (area) by using geometric characteristics of a vortex shape.

The apparatus of the present invention can be designed to have a cut-on frequency theoretically close to 0 regardless of a space (area) that it occupies.

In one general aspect, an apparatus 100 for vibration damping equipped on a target object 500 of a flat plate shape to absorb vibration includes: a vortex part 110 formed in a vortex shape within an installation area when viewed from the top, a thickness of the vortex part 110 gradually increasing from a center to an outer periphery according to a power law and an outer periphery end of the vortex part 110 being connected to the target object 500; a space part 120 formed as a separation space between at least one pair of the vortex parts 110; and a concave part 130 formed as a concave space as the thickness of the vortex part 110 gradually decreases from the outer periphery to the center.

A plurality of the vortex parts 110 may have the same shape and length.

A plurality of vortex parts 110 may be formed by being divided into a plurality of types having different shapes and lengths.

The vortex parts 110 of different types may be alternately arranged to form one set, and the plurality of sets may be arranged circumferentially and evenly.

The vortex parts 110 of different types may have different lengths.

A vibration damping material 200 may be provided at a central end of the vortex part 110.

A separate vibration damping material 200 may be provided at the center end of each vortex part 110.

A shape formed by an edge boundary of the installation area may be a closed curve or a closed polygon including a circle, an ellipse, or a polygon.

When the shape formed by the edge boundary of the installation area is not circular, an angle at which the installation area is arranged based on the target object 500 may be appropriately determined according to characteristics of the vibration to be dampened.

The apparatus 100 for vibration damping may be formed on the same plane as the target object 500, or may be stacked on a surface of the target object 500.

When the apparatus 100 for vibration damping is stacked on the surface of the target object 500, the concave part 130 may be arranged so that the concave part 130 faces the target object 500.

**BRIEF DESCRIPTION OF THE DRAWINGS**

FIG. 1 is a diagram illustrating a structure of an apparatus (proposed 2D ABH of) of the present disclosure and the conventional apparatus (conventional 2D ABH).

FIG. 2 is a diagram illustrating a design process of the apparatus (proposed 2D ABH) of the present disclosure.

FIG. 3 is a diagram illustrating various examples of a vortex part shape of the apparatus of the present disclosure.

FIG. 4 is a diagram illustrating a size comparison of the apparatus (proposed 2D ABH) of the present disclosure and the conventional apparatus (conventional 2D ABH) for the same cut-on frequency.

FIG. 5 is a diagram illustrating a BAM reduction amount when applying a method of attaching a vibration damping material, the conventional 2D ABH, and the proposed 2D ABH.

FIG. 6 is a diagram illustrating an example of the proposed 2D ABH including different types of vortex parts.

FIGS. 7 to 10 are diagrams illustrating various embodiments of an installation area of the proposed 2D ABH.

FIG. 11 is a diagram illustrating another embodiment of a connection structure of the proposed 2D ABH with a target object.

[Detailed Description of Main Elements]

| | | | | |
|---|---|---|---|---|
| 100: | Proposed 2D ABH | | | |
| 110: | Vortex part | 120: | Space part | |
| 130: | Concave part | 100': | Conventional 2D ABH | |
| 200: | Vibration damping material | | | |
| 500: | Target object | | | |

**DETAILED DESCRIPTION OF EMBODIMENTS**

Hereinafter, an apparatus for vibration damping according to the present disclosure having the above-described configuration will be described in detail with reference to the attached drawings.

The present disclosure is to reduce vibration through a very small structure relative to a wavelength by designing a vortex-shaped acoustic black hole in which a plurality of acoustic black holes are harmoniously configured in a vortex shape. The acoustic black hole is a wedge-shaped structure whose thickness decreases according to a power law, and by making a group velocity of an incident elastic wave extremely low toward an end of the wedge, the elastic wave is focused with a high energy density, and by attaching a small amount of viscoelastic material to the end, the focused vibration energy is dissipated into heat energy, thereby reducing the vibration of the structure.

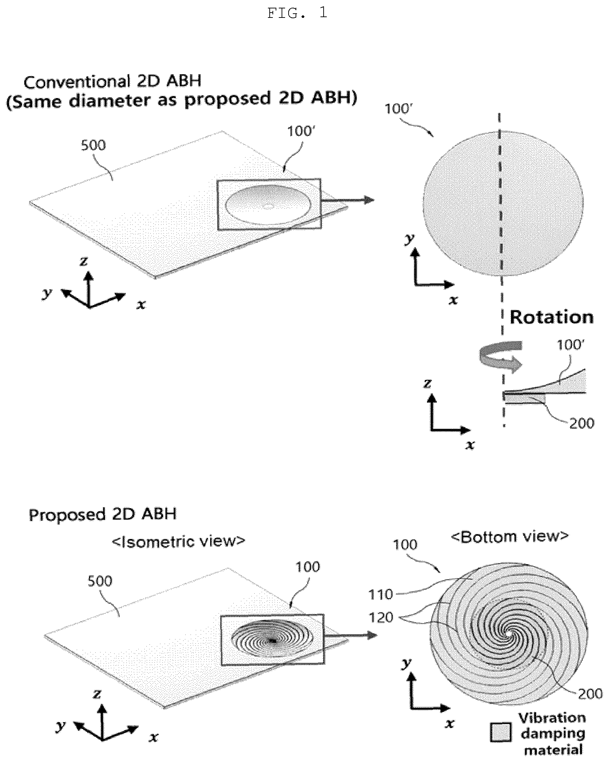

FIG. 1 illustrates an apparatus for vibration damping of the present disclosure and the related art. The upper drawing of FIG. 1 is the apparatus for vibration damping of the related art, and the lower drawing of FIG. 1 is the apparatus for vibration damping of the present disclosure. Each of them will be described in detail below. The apparatus for vibration damping in this specification is a 2D ABH type in both the related art and the present disclosure, and it is to be noted that the two terms "apparatus for vibration damping" and "2D ABH" are used with the same meaning hereinafter

As illustrated in the upper drawing of FIG. 1, a conventional 2D ABH 100' has been studied as a type of acoustic black hole for application to a flat plate structure in the past. To easily describe the shape of the conventional 2D ABH 100',

as illustrated in the zx drawing on the right side of the upper drawing of FIG. 1, it is a form in which a 1D ABH is rotated with its end as a rotation axis. The most basic form of the apparatus for vibration damping is a beam shape that extends from one side to the other side, in which the other end is fixed to a target object 500. The apparatus for vibration damping operates in such a way that the vibration generated from the target object 500 is transmitted from one end to the other end, and naturally dissipates vibration energy to dampen the vibration while the beam-shaped device itself vibrates. This 1D ABH is formed in a form in which a height gradually increases from one side to the other side by taking into consideration the frequency of the vibration, etc., to be dampened, etc. In other words, to summarize, the conventional 2D ABH 100' illustrated in the upper drawing of FIG. 1 is a form of a rotating array in which a beam-shaped 1D ABH extending from one side to the other side and gradually increasing in height from one side to the other side is rotated around one end. A cut-on frequency of the conventional 2D ABH is determined by a diameter, and the larger the diameter, the lower the cut-on frequency. In other words, in order to absorb low-frequency elastic waves by lowering the cut-on frequency, the diameter of the conventional 2D ABH needs to increase, so the conventional 2D ABH occupies a large space (area). In this respect, the conventional 2D ABH 100' had a problem in that there were significant limitations in its utilization.

The 2D ABH of the present disclosure in the lower drawing of FIG. 1 is the structure of the apparatus of the present disclosure. Unlike the conventional 2D ABH 100' which was the rotating array shape that rotated the beam shape (increasing from one side ... (omitted) ...), it is formed in a vortex shape formed within an installation area when viewed from the top, but the thickness gradually increases according to the power law from the center to the outer periphery, and it is formed in a shape that includes a vortex part 110 whose outer periphery end is connected to the target object 500. In this case, the vortex part 110 may be formed as a single one, or may be formed so that a plurality of vortex parts are arranged in the space between each other without overlapping. When only a single vortex part is formed, an empty space exists in the vortex shape formed by the vortex part 110, and when the plurality of vortex parts are formed, a separation space exists between at least one pair of vortex parts 110, which is called a space part 120.

The vortex part 110 has an outer peripheral end that is a fixed end connected to the target object 500, and a central end that is a freely movable free end. Therefore, as described above, the vortex part 110 has a shape in which the thickness gradually increases from the free end to the fixed end according to the power law, so the vortex part 110 itself may act as an excellent acoustic black hole. Meanwhile, the vortex part 110 may have a constant width from the center to the outer periphery. However, in this case, elastic waves transmitted to an area of the outer periphery that is not connected to the vortex part 110 may not be transmitted to the vortex part 110, which may result in a decrease in vibration damping performance. Therefore, the vortex part 110 is formed in a shape in which a width gradually increases from the center to the outer periphery, as illustrated.

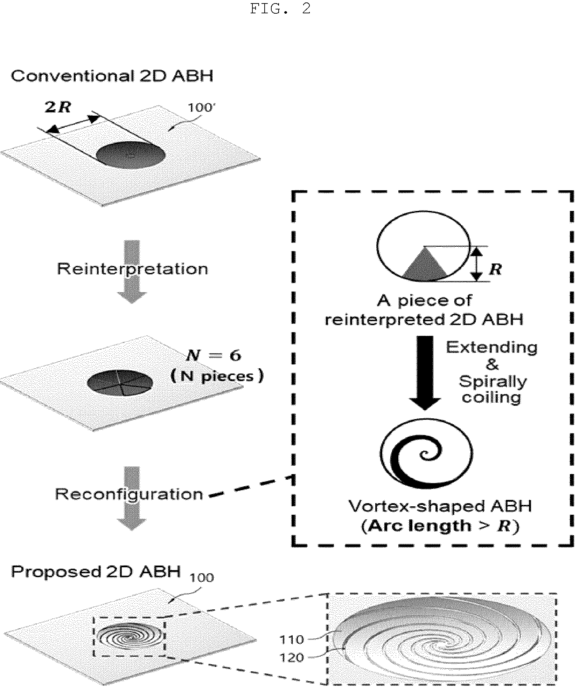

FIG. 2 conceptually illustrates a design process of the apparatus (2D ABH of the present disclosure) of the present disclosure. As illustrated in the upper drawing of FIG. 2, first, it is assumed that the conventional 2D ABH 100' exists. The conventional 2D ABH 100' may be reinterpreted as a 1D ABH of several pieces whose widths increase from the center to the outer periphery as illustrated in the middle drawing of FIG. 2. Each piece, whose thickness decreases according to the power law as it approaches the center of the installation area, may be replaced in a form that is wound in a long shape along a vortex as illustrated in the dotted box of FIG. 2. Through this process, a 2D ABH 100 of the present disclosure as illustrated in the lower drawing of FIG. 2 may be designed.

In the drawing, an example is illustrated in which the vortex parts 110 are formed in a form that almost completely fills the installation area. To be more precise, an example is illustrated in which the sum of the outer ends of the plurality of vortex parts 110 is approximately the same as the circumference of the installation area. When formed in this form, all elastic waves may be dampened without being missed regardless of the direction in which they are transmitted. In addition, in this form, since the shape formed by combining the vortex part 110 and the space part 120 becomes the same shape as the conventional 2D ABH 100', it is also convenient for concretization. However, the present disclosure is not limited to this shape. The target object 500 may be, for example, a housing of a mechanical apparatus, and in this case, the direction in which the vibration is transmitted may be limited to a specific direction depending on an operation pattern of the mechanical apparatus. Alternatively, directionality may be generated in the vibration transmission due to the shape or structure of the target object 500. In this case where the vibration transmission is directional, the outer peripheral ends of the vortex parts 110 may be connected only in the range of the direction in which the vibration is transmitted, without the need for the vortex parts 110 to be provided in all directions within the installation area. In other words, the outer peripheral ends of the plurality of the vortex parts 110 do not necessarily have to be connected to completely fill the perimeter of the installation area as in the example of the drawing, and may be connected only in a part of the perimeter of the installation area, if necessary, even if not illustrated.

The ABH absorbs elastic waves in a range above the cut-on frequency determined by the material and shape. Since the 1D ABH needs to be long in length and the 2D ABH needs to be large in radius to lower the cut-on frequency, a large installation space is required for absorbing low-frequency elastic waves. In particular, since the cut-on frequency of the conventional 2D ABH 100' as illustrated in the upper drawings of FIGS. 1 and 2 is theoretically inversely proportional to the square of the radius, there is a limitation that the radius needs to increase exponentially in order to lower the cut-on frequency. However, the 2D ABH 100 of the present disclosure as illustrated in the lower drawings of FIGS. 1 and 2 considers the conventional 2D ABH 100' as several pieces of 1D ABH with decreasing width arranged along the circumference through a reinterpretation process as in the middle drawing of FIG. 2, and each piece is replaced with the vortex part 110 having a length much longer than the radius of the installation area through a reconfiguration process as in the dotted box of FIG. 2. Accordingly, the 2D ABH 100 of the present disclosure may realize a much lower cut-on frequency than the conventional 2D ABH 100' that occupies the same installation area. In other words, to summarize, the 2D ABH 100 of the present disclosure may be designed much more compactly than the conventional 2D ABH 100' in terms of the vibration reduction through the low-frequency elastic wave absorption.

In addition, in the ABH for vibration damping, performance is basically achieved only when the vibration damping material is provided. In the case of the 2D ABH 100 of the present disclosure, a vibration damping material 200 is provided at the center end of the vortex part 110. More specifically, the separate vibration damping material 200 may be provided at the central end of each vortex part 110.

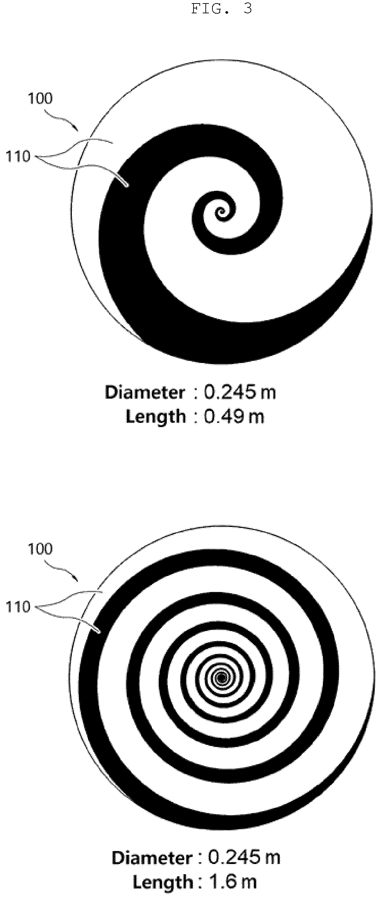

As described above, the cut-on frequency of the 2D ABH 100 of the present disclosure is determined according to the length of the vortex part 110, and the vortex part 110 may theoretically be extremely thin and long. Therefore, the 2D ABH 100 of the present disclosure may be designed to have the cut-on frequency close to 0 theoretically regardless of its diameter. FIG. 3 is a drawing for describing this.

The 2D ABH 100 of the present disclosure illustrated in the upper and lower drawings of FIG. 3 each have the same diameter (0.245 m). However, in the case of the upper drawing of FIG. 3, the length of the vortex part 110 is 0.49 m, while in the case of the lower drawing of FIG. 3, the length of the vortex part 110 may be formed much longer, 1.6 m. In other words, by adjusting the number of rotations of the vortex part 110 even in the same space, the cut-on frequency may be lowered to a much lower frequency.

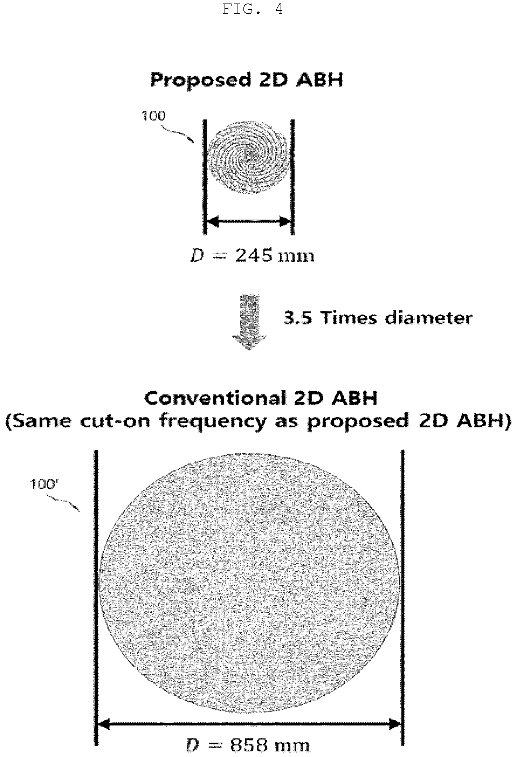

FIG. 4 compares the sizes of the 2D ABH 100 of the present disclosure and the conventional 2D ABH 100' for the same cut-on frequency. The length of each of the acoustic black holes, i.e., the vortex parts 110 constituting the 2D ABH 100 of the present disclosure is 330 mm, and the diameter of the outer circle of the 2D ABH 100 of the present disclosure is 245 mm. In this case, the cut-on frequency of the 2D ABH 100 of the present disclosure is formed lower than 69 Hz. In order to make the cut-on frequency 69 Hz, the diameter of the conventional 2D ABH 100' should theoretically be 858 mm, which is 3.5 times larger than the diameter of the 2D ABH 100 of the present disclosure, as illustrated in the lower drawing of FIG. 4. From Table 1 below, it can be seen that the 2D ABH 100 of the present disclosure may be designed to have a much smaller diameter than the conventional 2D ABH 100' when designed to have the same cut-on frequency.

[Table 1]

|  | Proposed 2D ABH | Conventional 2D ABH |
|---|---|---|
| **Diameter ($D$)** | 245 mm | 858 mm |
| **Cut-on frequency** | < 69 Hz | 69 Hz |

The vibration damping performance of the 2D ABH 100 of the present disclosure was compared with the existing technology of a method of attaching a vibration damping material and the conventional 2D ABH 100'. The vibration reduction target is an aluminum flat plate with a width of 700 mm, a length of 600 mm, and a thickness of 9 mm, and harmonic excitation is applied to one point on the flat plate. As a vibration evaluation index, a band-averaged mobility (BAM), which represents the surface-averaged vibration energy of a flat plate within a frequency range of interest, was calculated and expressed as follows.

$$\mathrm{BAM} = 10\log_{10}\left(\frac{1}{f_2 - f_1}\int_{f_1}^{f_2} 10^{\frac{\mathrm{SAM}}{10}} df\right)\ [\mathrm{dB}]$$

The SAM means surface-averaged mobility and may be expressed by the following formula.

$$\mathrm{SAM} = 10\log_{10}\left(\frac{1}{S}\iint_{S}\frac{(|v|/F)^2}{(1\ [\mathrm{m/s/N}])^2} dS\right)\ [\mathrm{dB}]$$

S represents the area of the flat plate, v represents the velocity, F represents the magnitude of the harmonic excitation force applied to the flat plate, and $f_1$ and $f_2$ represent the lower and upper limits of the frequency range of interest, respectively.

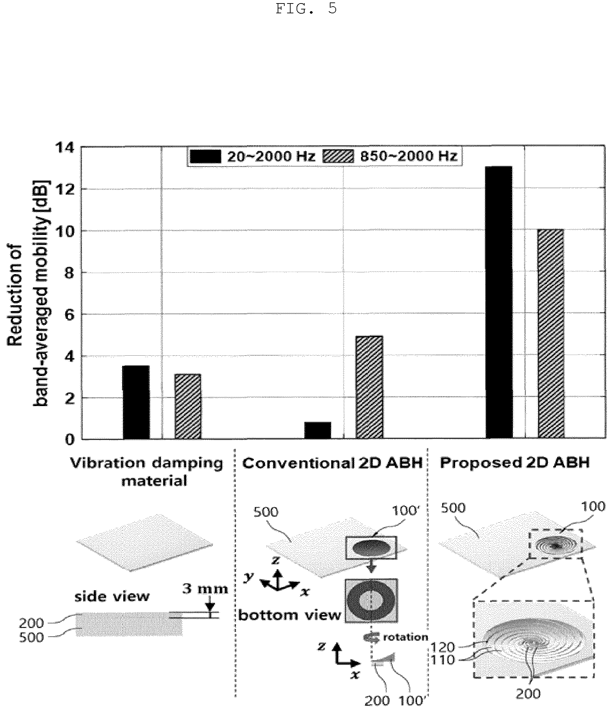

FIG. 5 illustrates a BAM reduction amount when applying a method of attaching a vibration damping material, the conventional 2D ABH, and the 2D ABH of the present disclosure. In this case, the method of attaching a vibration damping material was chosen to attach a 3 mm thick damping rubber to the entire surface of one side of the flat plate. The conventional 2D ABH 100' and the 2D ABH 100 of the present disclosure were installed in a circular area with a plate diameter of 245 mm as illustrated in the lower part of FIG. 5. The theoretical cut-on frequency of the conventional 2D ABH 100' as a comparison target is approximately 850 Hz.

Referring to FIG. 5, the band-averaged mobility of the method of attaching a vibration damping material that widely attaches the damping rubber is similar for both the 20 to 2000 Hz range and the 850 to 2000 Hz range. In contrast, the conventional 2D ABH 100' illustrates almost no vibration reduction effect in the frequency range below 850 Hz, which is the cut-on frequency, but illustrates excellent vibration reduction performance compared to the method of attaching a vibration damping material in the frequency range above 850 Hz. Meanwhile, since the 2D ABH 100 of the present disclosure has a much lower cut-on frequency than the conventional 2D ABH 100' occupying the same area, it exhibits excellent vibration reduction performance even in a frequency range below 850 Hz. In addition, the 2D ABH 100 of the present disclosure exhibits excellent vibration reduction performance even in a frequency range higher than the cut-on frequency of the conventional 2D ABH 100'. From these results, it can be seen that the 2D ABH 100 of the present disclosure exhibits the high vibration reduction performance while occupying a much smaller space than the conventional 2D ABH 100' in terms of the low-frequency vibration reduction.

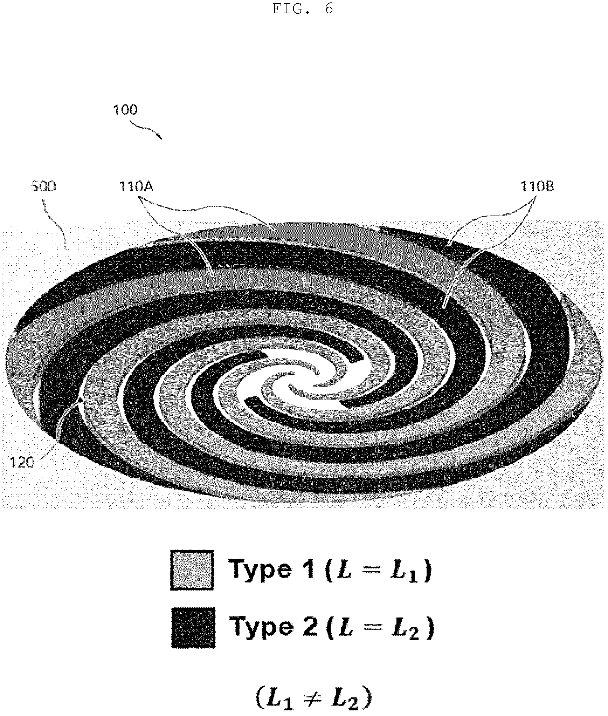

FIG. 6 illustrates an example of the 2D ABH of the present disclosure including different types of vortex parts. The 2D ABH 100 of the present disclosure described and illustrated above has the plurality of vortex parts 110 all formed with the same shape and length, but the present disclosure is not limited to this form. The plurality of vortex parts 110 may be formed by dividing into a plurality of types having different shapes and lengths, and FIG. 6 is an example of such a configuration. FIG. 6 illustrates an example in which two types of vortex parts 110A and 110B are formed: a first type vortex part (110A, "Type 1") having a length of L1 and a second type vortex part (110B, "Type 2") having a length of L2.

By arranging the vortex parts of different lengths in this way, the vibration reduction performance in a specific frequency range may be improved. This is because the vortex parts of different lengths simultaneously cause a dynamic vibration absorber (DVA) effect and an ABH effect in a specific frequency range, thereby greatly reducing vibration. In other words, by forming the plurality of vortex parts 110 to have different shapes and lengths in this way, the frequency range in which the DVA effect occurs may be expanded, or may be appropriately adjusted to a target area.

Meanwhile, FIG. 6 illustrates an example in which vortex parts having two different shapes and lengths are alternately arranged to form one set, and the plurality of sets are evenly arranged circumferentially. This structure has high structural stability and good balance. However, of course, the present disclosure is not limited thereto. That is, the vortex parts having different shapes and lengths do not necessarily have to be interlaced as in FIG. 6, and the arrangement may be appropriately changed as needed.

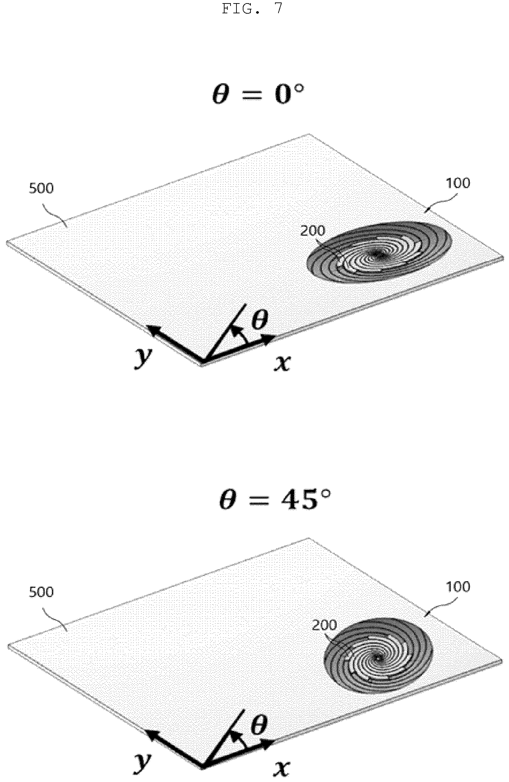

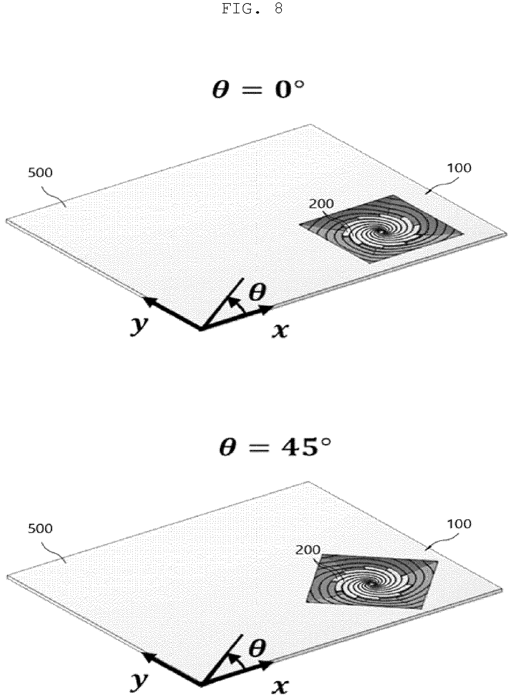

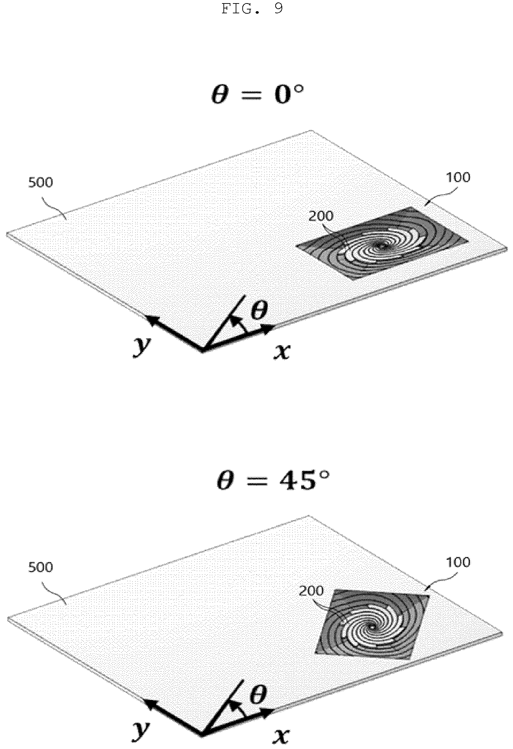

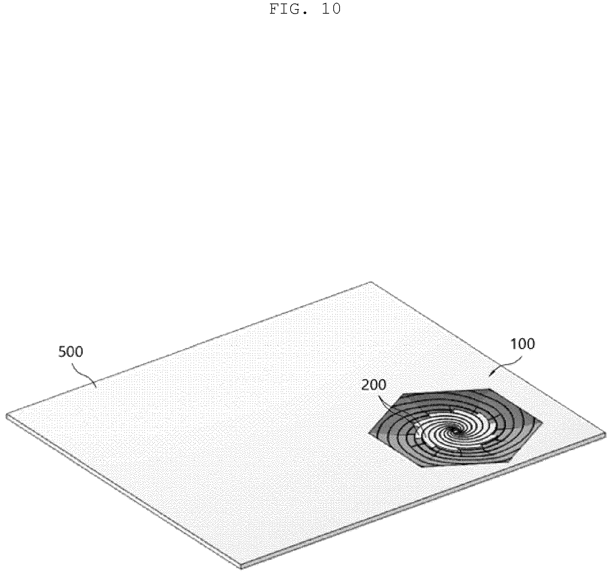

In the drawings above, examples of the installation area of the 2D ABH 100 of the present disclosure being formed in a circular shape are illustrated. However, the present disclosure is not limited thereto, and the installation area may be formed in various shapes as needed. FIGS. 7 to 10 illustrate various embodiments of the installation area of the 2D ABH of the present disclosure. FIG. 7 illustrates a case where the installation area is ellipse, FIG. 8 illustrates a case where the installation area is square, FIG. 9 illustrates a case where the installation area is rectangular, and FIG. 10 illustrates a case where the installation area is hexagonal. In this way, in the 2D ABH 100 of the present disclosure, the shape formed by an edge boundary of the installation area may be formed as a closed curve or a closed polygon including a circle, an ellipse, or a polygon.

To elaborate, in general, the "closed curve" means a closed figure surrounded by lines including straight lines and curves, and in that sense, the "closed polygon" may also be included in the closed curve. However, in order to make it more intuitive, the "closed polygon" is defined as a closed shape surrounded only by straight lines, and the "closed curve" is defined as a closed shape that is formed only by curves, such as a circle, an ellipse, a semicircle, a sector, or a shape that includes both curves and straight lines. In addition, the closed polygon is not limited to a convex polygon, and a concave polygon, such as a star, may also be included as needed. In this way, the shape of the installation area may be changed in many different ways. This is because the shape or structure of the area where vibration is actually desired to be dampened may vary greatly, and the shape of the installation area is naturally affected by the shape or structure of the area.

When the shape formed by the edge boundary of the installation area is circular, as in the examples of FIGS. 1 to 6, since there is no directionality, it is only necessary to determine where to arrange the installation area on the target object 500. However, in the case of a directional shape as in the examples of FIGS. 7 to 10, it is necessary to consider the position and angle where the 2D ABH 100 of the present disclosure is installed on the target object 500. As a specific example, depending on the direction or frequency of vibration transmission on the target object 500, there may be considerations such as arranging the longer side toward the side where more vibration is transmitted. That is, when the shape formed by the edge boundary of the installation area is not circular, the angle at which the installation area is arranged based on the target object 500 may be appropriately determined according to the characteristics of the vibration to be dampened.

The 2D ABH 100 of the present disclosure illustrated in FIGS. 1 to 10 is formed in a form that a portion of the target object 500 is concavely recessed. That is, it is considered that the hole corresponding to the installation area is formed on the target object 500, and the vortex parts 110 are arranged in the hole, and the outer peripheral ends of the vortex parts 110 included in the 2D ABH 100 of the present disclosure are directly connected to the target object 500. In other words, this case may be said to be a case where the 2D ABH 100 of the present disclosure is formed on the same plane as the target object 500. In this case, when the material of the target object 500 and the 2D ABH 100 of the present disclosure are the same material, the 2D ABH 100 of the present disclosure may be manufactured by shaving and cutting the target object 500, so the 2D ABH 100 of the present disclosure and the target object 500 may be formed integrally.

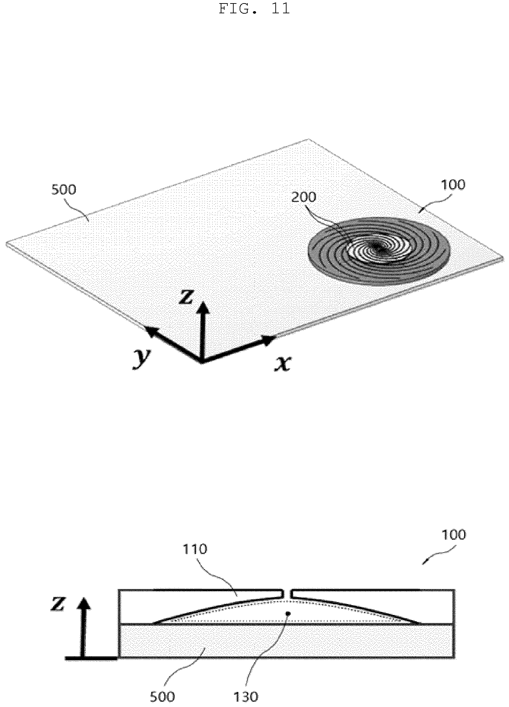

FIG. 11 illustrates another embodiment of the connection structure of the 2D ABH of the present disclosure with the target object. In FIGS. 1 to 10, an embodiment is illustrated in which the 2D ABH 100 of the present disclosure is formed on the same plane as the target object 500. However, FIG. 11 illustrates an embodiment in which the 2D ABH 100 of the present disclosure is stacked on the surface of the target object 500. As described above, the outer peripheral end of the vortex part 110 is connected to the target object 500, so vibrations coming through the target object 500 may be transmitted. In this case, the connection form may be a form in which the outer peripheral end and the target object 500 are on the same plane (as in FIGS. 1 to 10), but it does not have to be this way. That is, as illustrated in FIG. 11, the outer peripheral end of the vortex part 110 may be connected in the form attached to the surface of the target object 500. In this way, when the 2D ABH 100 of the present disclosure is stacked on the surface of the target object 500, the 2D ABH 100 of the present disclosure inevitably becomes a form that slightly protrudes from the target object 500. Therefore, this shape will be briefly referred to as a "relief shape."

In this way, when the 2D ABH 100 of the present disclosure is a relief shape, there is a risk that the vortex part 110 may interfere with the target object 500 when vibrating in the up-and-down direction. In particular, an appropriate amount of free space must be secured so that the central end of the vortex part 110 does not come into contact with the target object 500 while vibrating. Meanwhile, the 2D ABH 100 of the present disclosure has a concave part 130 that is formed as a concave space as the thickness of the vortex part 110 gradually decreases from the outer periphery to the center. In the lower drawing of FIG. 11, such a concave part 130 is indicated by a dotted line. The concave part 130 may play the role of this free space, and therefore, when the 2D ABH 100 of the present disclosure is stacked on the surface of the target object 500, it is preferable that the concave part 130 is arranged so as to face the target object 500.

Table 2 below summarizes the band-averaged mobility (BAM) reduction amount by frequency for the cases where only the vibration damping material is used, where the conventional 2D ABH is used, and where various embodiments of the 2D ABH of the present disclosure are used. As explicitly illustrated in Table 2, when only the vibration damping material is used, the reduction itself is also low, but the difference in performance is considerably large depending on the frequency band. Unlike the case of the vibration damping material described earlier, the conventional 2D ABH exhibits relatively superior performance in the frequency range above the cut-on frequency of 850 Hz. On the other hand, in the 2D ABH of the present disclosure, it may be confirmed that the reduction is significantly higher than the previous two cases in all the embodiments.

In addition, the performance of the 2D ABH of the present disclosure may be confirmed for each embodiment. In the case where the installation area is circular, since there is no directionality, vibrations from all directions may be naturally transmitted and dampened, so it has the best performance among all the cases. However, in the case of other shapes, even if the performance is lower than other embodiments of the present disclosure, it may be confirmed that the vibration damping material still shows significantly superior performance compared with the conventional ones.

[Table 2]

| Band-averaged mobility (BAM) reduction amount | 20 to 2000 Hz band | 850 to 2000 Hz band |
|---|---|---|
| Vibration damping material | 3.5 dB | 0.8 dB |
| Conventional 2D ABH | 3.1 dB | 4.9 dB |
| Proposed 2D ABH (circle) | 13.0 dB | 10.0 dB |
| Proposed 2D ABH (ellipse, $\theta = 0°$) | 12.6 dB | 9.3 dB |
| Proposed 2D ABH (ellipse, $\theta = 45°$) | 12.5 dB | 9.6 dB |
| Proposed 2D ABH (square, $\theta = 0°$) | 12.1 dB | 9.7 dB |
| Proposed 2D ABH (square, $\theta = 45°$) | 8.0 dB | 9.4 dB |
| Proposed 2D ABH (rectangle, $\theta = 0°$) | 11.0 dB | 8.8 dB |
| Proposed 2D ABH (rectangle, $\theta = 45°$) | 11.0 dB | 9.4 dB |
| Proposed 2D ABH (hexagon) | 11.6 dB | 9.6 dB |

(continued)

| Band-averaged mobility (BAM) reduction amount | 20 to 2000 Hz band | 850 to 2000 Hz band |
| --- | --- | --- |
| Proposed 2D ABH (relief shape) | 10.0 dB | 7.0 dB |

The present disclosure has proposed the technology of increasing the vibration damping performance while having the small installation space by designing the structure capable of sufficiently reducing the low-frequency vibrations even while occupying the relatively small space. In particular, by increasing the length of the acoustic black hole by using the geometric characteristics of the vortex shape even while occupying the same area, it is possible to reduce the cut-on frequency of the acoustic black hole and absorbing and dissipating the low-frequency elastic waves. In order to attenuate the low-frequency vibrations, the apparatus of the present disclosure may be designed more compactly so that the acoustic black hole length is longer while reducing the installation space. Since the acoustic black hole length may theoretically be infinitely long even when it occupies a small area, the apparatus of the present disclosure may be utilized to absorb the low-frequency elastic waves while being much more compact if the processing precision is sufficiently high. The present disclosure is a technology that can dampen the vibrations in the wide band including the low-frequency band in the space-efficient manner through the different geometric approach from the existing approach, and is expected to be applicable to various fields (e.g., home appliances, rotating machines, transportation/transportation means, buildings, semiconductor ultra-precision processes, etc.) that require the low-frequency vibration reduction while also requiring the miniaturization of the attenuation apparatus.

The present disclosure is not limited to the embodiments described above, and may be applied to various fields. In addition, the present disclosure may be variously modified by those skilled in the art to which the present disclosure pertains without departing from the gist of the present disclosure claimed in the claims.

**Claims**

1.  An apparatus (100) for vibration damping equipped on a target object (500) of a flat plate shape to absorb vibration, the apparatus comprising:

    a vortex part (110) formed in a vortex shape within an installation area when viewed from the top, a thickness of the vortex part (110) gradually increasing from a center to an outer periphery according to a power law and an outer periphery end of the vortex part (110) being connected to the target object (500);
    a space part (120) formed as a separation space between at least one pair of the vortex parts (110); and
    a concave part (130) formed as a concave space as the thickness of the vortex part (110) gradually decreases from the outer periphery to the center.

2.  The apparatus of claim 1, wherein a plurality of the vortex parts (110) have the same shape and length.

3.  The apparatus of claim 1, wherein a plurality of vortex parts (110) are formed by being divided into a plurality of types having different shapes and lengths.

4.  The apparatus of claim 3, wherein the vortex parts (110) of different types are alternately arranged to form one set, and the plurality of sets are arranged circumferentially and evenly.

5.  The apparatus of claim 3, wherein the vortex parts (110) of different types have different lengths.

6.  The apparatus of claim 1, wherein a vibration damping material (200) is provided at a central end of the vortex part (110).

7.  The apparatus of claim 6, wherein a separate vibration damping material (200) is provided at the center end of each vortex part (110).

8.  The apparatus of claim 1, wherein a shape formed by an edge boundary of the installation area is a closed curve or a closed polygon including a circle, an ellipse, or a polygon.

9.  The apparatus of claim 8, wherein when the shape formed by the edge boundary of the installation area is not circular, an angle at which the installation area is arranged based on the target object 500 is appropriately determined according to characteristics of the vibration to be dampened.

10. The apparatus of claim 1, wherein the apparatus (100) for vibration damping is formed on the same plane as the target object (500), or is stacked on a surface of the target object (500).

11. The apparatus of claim 10, wherein when the apparatus (100) for vibration damping is stacked on the surface of the target object (500), the concave part 130 is arranged so that the concave part (130) faces the target object (500).

FIG. 1

Conventional 2D ABH
(Same diameter as proposed 2D ABH)

Proposed 2D ABH

<Isometric view>

<Bottom view>

FIG. 2

Conventional 2D ABH

$2R$     100'

Reinterpretation

$N = 6$
(N pieces)

Reconfiguration

A piece of
reinterpreted 2D ABH

$R$

Extending
&
Spirally
coiling

Vortex-shaped ABH
(Arc length > $R$)

Proposed 2D ABH 100

110
120

FIG. 3

100

110

**Diameter : 0.245 m**
**Length : 0.49 m**

100

110

**Diameter : 0.245 m**
**Length : 1.6 m**

FIG. 4

**Proposed 2D ABH**

$D = 245\,\mathrm{mm}$

**3.5 Times diameter**

**Conventional 2D ABH**
**(Same cut-on frequency as proposed 2D ABH)**

$D = 858\,\mathrm{mm}$

FIG. 5

FIG. 6

Type 1 $(L = L_1)$

Type 2 $(L = L_2)$

$(L_1 \neq L_2)$

FIG. 7

$\theta = 0°$

$\theta = 45°$

FIG. 8

FIG. 9

$$\theta = 0°$$

$$\theta = 45°$$

FIG. 10

FIG. 11

Europäisches
Patentamt

European
Patent Office

Office européen
des brevets

# EUROPEAN SEARCH REPORT

**Application Number**

EP 25 18 3408

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 117 432 739 A (716TH RES INSTITUTE OF CHINA STATE SHIPBUILDING CORPORATION LIMITED) 23 January 2024 (2024-01-23) * figure 4 * | 1-11 | INV. F16F15/02 G10K11/16 |
| A | CN 115 620 689 A (UNIV NANJING AERONAUTICS & ASTRONAUTICS) 17 January 2023 (2023-01-17) * figure 6 * | 1-11 | |
| A | US 2021/054898 A1 (CHENG LI [CN] ET AL) 25 February 2021 (2021-02-25) * figure 3 * | 1 | |
| A | CN 113 658 573 A (UNIV NORTHEASTERN) 16 November 2021 (2021-11-16) * figures 1,5 * | 1 | |

|  | TECHNICAL FIELDS SEARCHED (IPC) |
|---|---|
|  | F16F G10K |

The present search report has been drawn up for all claims

| Place of search | Date of completion of the search | Examiner |
|---|---|---|
| The Hague | 14 October 2025 | Beaumont, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 3408

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2025

| Patent document cited in search report | | Publication date | Patent family member(s) | | Publication date |
|---|---|---|---|---|---|
| CN 117432739 | A | 23-01-2024 | NONE | | |
| CN 115620689 | A | 17-01-2023 | NONE | | |
| US 2021054898 | A1 | 25-02-2021 | CN | 110094452 A | 06-08-2019 |
| | | | US | 2021054898 A1 | 25-02-2021 |
| | | | WO | 2019148891 A1 | 08-08-2019 |
| CN 113658573 | A | 16-11-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240080394
- KR 1020250046925